# EUROPÄISCHE PATENTSCHRIFT

(11) **EP 0 739 076 B1**
(45) Veröffentlichungstag und Bekanntmachung des Hinweises auf die Patenterteilung: **16.06.1999**
(21) Anmeldenummer: 96105842.7
(22) Anmeldetag: 13.04.1996
(51) Int. Cl.: H02K 1/20, H02K 9/00, H02K 3/22, H02K 3/24

(54) **Elektrische Maschine**
Electric machine
Machine électrique

(30) Priorität: 20.04.1995 DE 19514592
(43) Veröffentlichungstag der Anmeldung: 23.10.1996
(60) Teilanmeldung: 98119580.3
(73) Patentinhaber: ABB PATENT GmbH, 68309 Mannheim (DE)
(72) Erfinder: Söhner, Walter, 76149 Karlsruhe (DE)
(74) Vertreter: Rupprecht, Klaus, Dipl.-Ing.

(56) Entgegenhaltungen:
- BE-A- 534 929
- DE-A- 2 851 569
- US-A- 3 171 996
- US-A- 3 348 081
- US-A- 3 784 851
- US-A- 4 922 147
- JOURNAL OF PHYSICS E: SCIENTIFIC INSTRUMENTS , Bd. 14, Nr. 2, Februar 1981, DORKING ,GB, Seiten 208-214, XP002008319 W. D. MORRIS: "A PRESSURE TRANSMISSION SYSTEM FOR FLOW RESISTANCE MEASUREMENTS IN A ROTATING TUBE"

## Beschreibung

Die Erfindung betrifft eine elektrische Maschine mit einem Gehäuse, mit einem Stator und einem Rotor, mit einer Statorwicklung und mit einer Rotorwicklung, die jeweils aus Leiterstäben gebildet sind, mit einem zwischen dem Stator und dem Rotor befindlichen Ringspalt, welcher Stator aus Blechpaketen mit an seiner dem Ringspalt zugewandten Oberfläche eingeformten Statornuten für jeweils wenigstens einen der Statorwicklung zugehörigen Leiterstab und mit radial angeordneten Zwischenräumen gebildet ist, die für die Statorwicklung als Kühlkanäle dienen, durch welche ein Kühlgas, vorzugsweise Luft, aus einer Zuströmkammer zum Ringspalt und umgekehrt von dem Ringspalt zu einer Abströmkammer hindurchströmt, welche Zuströmkammer und Abströmkammer strömungsmäßig durch Zwischenwände gegeneinander abgegrenzt sind.

Es ist allgemein bekannt, daß beim Betrieb von elektrischen Maschinen, wie zum Beispiel Generatoren, die thermische Beanspruchung der Wicklungsisolation, insbesondere aber die beim Betrieb auftretenden Temperaturen an Heißpunkten sich nachteilig auf das Betriebsverhalten auswirken. Daher besteht seitens der Hersteller derartiger Maschinen wie auch seitens deren Betreiber ein großes Interesse, die Maschinen mit einer ausreichenden Kühlung zu versehen und so einen möglichst störungsfreien Betrieb der Maschine zu gewährleisten.

Aus der US-A-3 348 081 ist eine elektrische Maschine mit Kammerkühlung bekannt, bei der das Blechpaket des Stators über die axiale Länge in strömungstechnisch wirksame Abschnitte unterteilt ist, wobei die einzelnen Abschnitte alternierend als Zuströmabschnitte und Abströmabschnitte angeordnet sind.

Aus der BE-A-534 929 ist eine elektrische Maschine bekannt, bei der die Kühlung des Rotors über Hohlleiter erfolgt, wobei sich unterhalb der Nuten im Rotoreisen zusätzliche Subnuten befinden, welche in radiale Kanäle der Hohlleiter münden. Nach Durchströmen der Hohlleiter gelangt das Gas über weitere radiale Kanäle in den Ringspalt.

Aus der EP 0 172 397 B1 ist eine elektrische Maschine der eingangs genannten Art bekannt, bei der zur Sicherstellung der ausreichenden Kühlung eine indirekt gekühlte Statorwicklung Verwendung findet. Bei dieser Maschine, deren Stator aus Blechpaketen mit als Kühlkanälen dienenden Zwischenräumen gebildet ist, wird über Zuströmkanäle kalte Luft als Kühlgas den zu Kühlkammern zusammengefaßten Kühlkanälen zugeführt, die nach Erwärmung beim Durchströmen der als Kühlkanäle dienenden Zwischenräume über Abströmkanäle abgeführt wird.

Unbefriedigend ist bei der bekannten elektrischen Maschine, daß infolge der hierbei vorgesehenen Anordnung der Kühlkanäle bzw. des Strömungsweges des für die Kühlung des Stators zugeführten Kühlgases die thermische Beanspruchung über die Länge der elektrischen Maschine unterschiedlich ist. Ein weiterer Nachteil ist darin zu sehen, daß die Leistung der Maschine bei Ausfall eines Kühlers wegen der ungleichmäßigen Temperaturverteilung soweit reduziert werden muß, bis die Temperaturen an den Heißpunkten zulässige Werte nicht überschreiten.

Da bekanntlich die Ausnutzung der Maschine durch die zulässige Temperatur der Heißpunkte begrenzt ist, ist es Aufgabe der Erfindung, eine möglichst intensive und gleichmäßige Kühlung der elektrischen Maschine über deren gesamte Länge zu erreichen, wobei im Falle des Versagens eines Kühlers eine möglichst kleine Leistungsreduktion notwendig sein sollte.

Diese Aufgabe wird in Verbindung mit dem Obergriff erfindungsgemäß durch die Merkmale des kennzeichnenden Teils des Anspruchs 1 gelöst. Dabei liegen der Erfindung die folgenden Überlegungen zugrunde. Die angestrebte intensive Kühlung wird dadurch erreicht, daß an denjenigen Orten, an denen die Verlustleistung in Form von Wärme entsteht, eine möglichst große Luftmasse pro Zeiteinheit vorbeigeführt wird und daß außerdem die Kühlluft mit möglichst niedriger Temperatur an die zu kühlenden Bereiche herangeführt wird. Darüber hinaus ist für eine gleichmäßige Kühlung erforderlich, daß die Kühlluft ungehindert, das heißt mit keinen oder nur vernachlässigbar geringen Strömungsverlusten, über die gesamte Maschinenlänge zu- und abgeführt werden kann. Dabei kommen derartige Kühlungsmaßnahmen vornehmlich für die Statorwicklung in Betracht, wobei selbstverständlich auch die Rotorwicklung von einer Kühleinrichtung beaufschlagt sein kann.

Eine elektrische Maschine, welche die vorstehenden Merkmale aufweist, ist entsprechend der Erfindung dadurch gekennzeichnet, daß der Stator in Sektoren mit jeweils einer Anzahl von Kühlkammern unterteilt ist, daß zwischen den Sektoren im Bereich der Zwischenräume jeweils eine strömungsdichte Schottwand angeordnet ist und daß die den Sektoren zugehörigen Kühlkammern sowohl axial als auch in Umfangsrichtung jeweils alternierend mit einer zugeordneten Zuströmkammer oder Abströmkammer verbunden sind.

In vorteilhafter Weiterbildung der Erfindung kann vorgesehen sein, daß die Zuströmkammern konzentrisch um die Abströmkammern angeordnet sind und mittels örtlicher Zuführungen mit den zugeordneten Kühlkammern verbunden ist.

Dabei kann entsprechend einer bevorzugten Ausführungsform der Erfindung vorgesehen sein, daß die Innenwände der Zuströmkammern gleichzeitig die Außenwände der Abströmkammern bilden und daß die Außenwände der Zuströmkammern von der Wandung des Gehäuses gebildet sind.

Diese vorteilhafte Ausgestaltungen und Verbesserungen der Erfindung sind Gegenstand der Unteransprüche.

Anhand eines in der schematischen Zeichnung dargestellten Ausführungsbeispiels sollen die Erfindung, vorteilhafte Weiterbildungen und Verbesserungen der Erfindung sowie besondere Vorteile der Erfindung näher erläutert und beschrieben werden.

Es zeigen:
- Fig. 1: eine erfindungsgemäße Maschine mit Stator und Rotor ohne Gehäuse im Teilschnitt in Schrägansicht,
- Fig. 2: einen Querschnitt durch die Maschine gemäß Fig. 1,
- Fig. 3: einen Längsschnitt durch eine erfindungsgemäße Maschine,
- Fig. 4: einen Teillängsschnitt durch die Maschine gemäß Fig. 3 mit einem Luftzuführungsteil.

Bei den folgenden Figuren werden für gleiche Merkmale jeweils die identischen Bezugsziffern verwendet, so daß diesbezügliche Erläuterungen nur noch bedarfsweise gegeben werden.

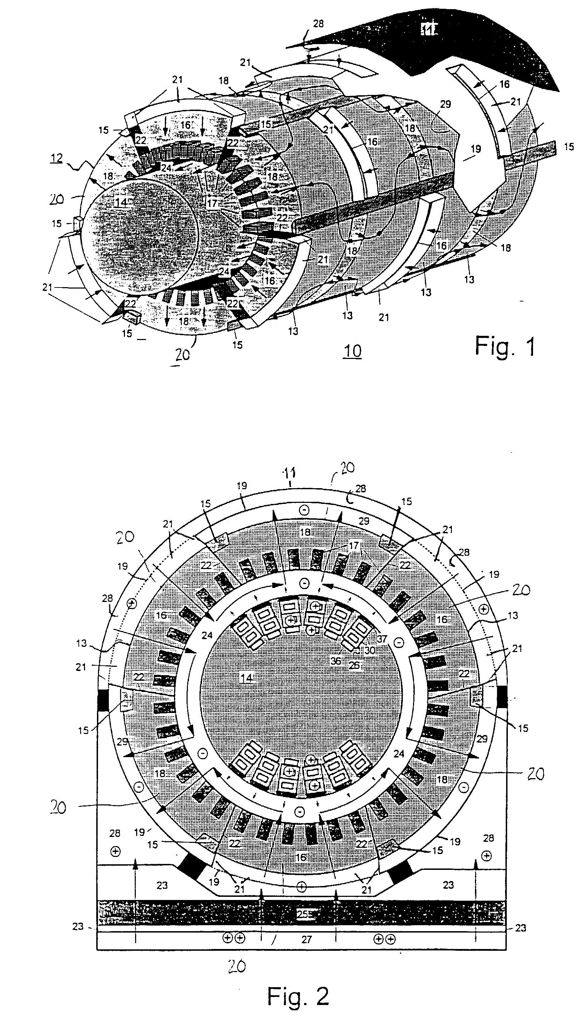

In Fig. 1 ist eine elektrische Maschine 10 mit einem Stator 12 und mit einem Rotor 14, einem teilweise dargestellten Gehäuse 11, einem Teil einer mit Durchbrüchen versehenen, zylindrischen Trennwand 19, sowie mit Zuströmkanälen 16 und mit Abströmkanälen 18 in Schrägansicht dargestellt, um die erfindungsgemäß vorgesehene Anordnung der Zuströmkanäle 16 und der Abströmkanäle 18 zu verdeutlichen, sowie deren Anschluß an die Zuströmkammer 28 und die Abströmkammer 29.

Dabei ist der Stator 12 in vier ringförmige Blechpakete 13 unterteilt, die durch Tragebalken 15 miteinander starr verbunden sind. Die Leiterstäbe 17 des Stators 12 liegen in Nuten an der Innenseite der Blechpakete 13. Zwischen den Blechpaketen 13 befindliche Zwischenräume sind mit strömungsdichten Schottwänden 22 in jeweils sechs Sektoren 20 unterteilt, die als Zuströmkanäle 16 oder Abströmkanäle 18 dienen. Die sich axial erstreckenden Schottwände 22 reichen radial bis zu einem Ringspalt 24, der in an sich bekannter Weise zwischen dem Stator 12 und dem Rotor 14 besteht und als weiterer Strömungskanal für Kühlgas, vorzugsweise Luft genutzt wird. Zur Vereinfachung ist der Rotor 14 in Fig. 1 nur als Zylinder dargestellt.

Wie in Verbindung mit dem in Fig. 2 dargestellten Querschnitt der Maschine gemäß Fig. 1 hervorgeht, sind die Zuströmkanäle 16 über strömungsdichte Verbindungsrahmen 21, die durch die zylindrische Trennwand 19 ragen, an die Zuströmkammer 28 angeschlossen, die ihrerseits von der Trennwand 19 und dem Gehäuse 11 abgegrenzt wird. In der Zuströmkammer herrscht ein Überdruck, was mit "+" gekennzeichnet ist. Die Abströmkanäle 18 münden in die Abströmkammer 29, welche von der Oberfläche der ringförmigen Blechpakete 13 und der Innenseite der zylindrischen Trennwand 19 begrenzt wird. In der Abströmkammer 29 herrscht bestimmungsgemäß ein Unterdruck, was mit "-" gekennzeichnet ist entsprechend einem ständigen Abzug von Kühlgas. In der Abströmkammer umströmt das Gas die Wände der Verbindungsrahmen 21.

Die Temperaturverteilung des Stators wird unter Ausnutzung der Wärmeleitfähigkeit des Eisens und der Statorstäbe 17 vergleichmäßigt, wenn man die Zuströmkanäle 16 und die Abströmkanäle 18 sowohl in Umfangsrichtung als auch in axialer Richtung alternierend anordnet.

In Fig. 2 sind im Rotor insgesamt zwölf gleichartige Rotornuten 26 dargestellt, die jeweils zwei Hohlleiter 30, eine Subnut 36, in der kein Leiter liegt, und einen Keil 37 enthalten.

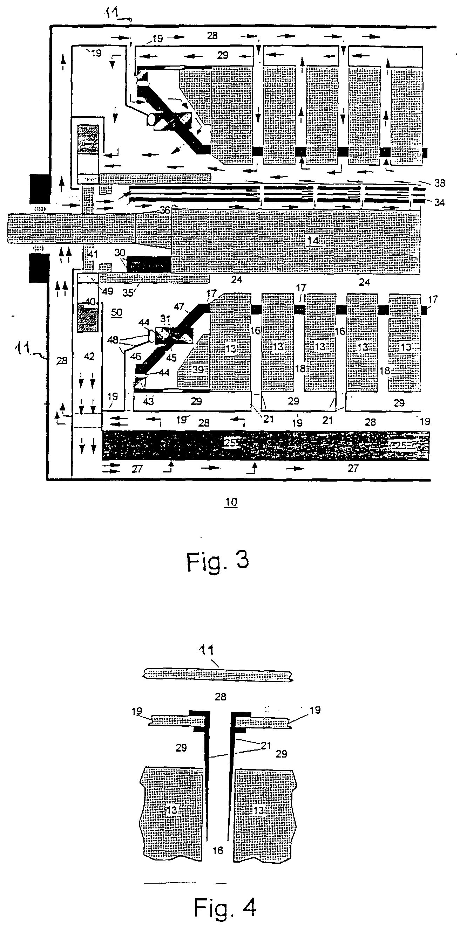

Die in Fig. 3 gezeigte Darstellung gibt einen Teil-Längsschnitt durch eine erfindungsgemäße Maschine 10 wieder und insbesondere den Verlauf des aufgrund der erfindungsgemäßen Ausgestaltung bedingten Kühlgasstroms. Hierbei ist erkennbar, daß das ausströmende Kühlgas jeweils zu den Stirnseiten 32 des Rotors 14 geleitet wird, wo es, wie aus dem Teilschnitt in Fig. 1 hervorgeht, radial abströmt.

In Fig. 4 schließlich ist beispielhaft ein Kühlgaszuleitungsteil 42 dargestellt, das dazu dient, die außenliegenden Zuströmkammern 16 mit den im Stator 12 befindlichen Kühlkanälen strömungsmäßig zu verbinden. Die Kühlgaszuleitungsteile sind vorzugsweise als schlauchähnliche Stulpen aus elastischem aber thermisch beständigem Material gefertigt und durchgreifen so die radial innenliegende Abströmkammer, ohne daß es zu Fehlströmungen kommt. Hierzu ist in Fig. 4 gezeigt, wie man die Rahmen 21 aus einem Formstück z. B. aus Gummi durch die Trennwand 19 in die Zuströmkanäle 16 hineinstecken kann.

### Bezugszeichenliste

- 10: Elektrische Maschine
- 11: Gehäuse
- 12: Stator
- 13: Ringförmige Blechpakete
- 14: Rotor
- 15: Tragebalken
- 16: Zuströmkanal
- 17: Leiterstäbe (Stator)
- 18: Abströmkanal
- 19: Trennwand
- 20: Sektor
- 21: Rahmen
- 22: Schottwände
- 23: Querrippen
- 24: Ring-(Luft)spalt
- 25: Kühler
- 26: Axialnut
- 27: Bodenraum
- 28: Zuströmkammer
- 29: Abströmkammer
- 30: Hohlleiter (Rotor)
- 31: Wickelkopfabstützung
- 33: Durchbrüche in den Querrippen
- 34: Ausnehmungen Leiter
- 35: Rotorkappe
- 36: Subnut
- 37: Rotorkeil
- 38: Ausnehmungen Keil
- 39: Preßplatte
- 40: Radial-Ventilator
- 41: Axial-Ventilator
- 42: Ventilator-Auslaßkanal
- 43: Ringförmige Abdeckung des Wickelkopfes
- 44: Dichtmasse
- 45: Dichtungskordel
- 46: Zuströmkammer Wickelkopf
- 47: Stäbe des Wickelkopfes
- 48: Ringförmige Schottwand
- 49: Zwischenring
- 50: Stirnseitiger Raum

## Patentansprüche

1. Elektrische Maschine (10) mit einem Gehäuse (11), mit einem Stator (12) und einem Rotor (14), mit einer Statorwicklung und mit einer Rotorwicklung, die jeweils aus Leiterstäben (17, 30) gebildet sind, mit einem zwischen dem Stator (12) und dem Rotor (14) befindlichen Ringspalt (24), welcher Stator (12) aus Blechpaketen (13) mit an seiner dem Ringspalt (24) zugewandten Oberfläche eingeformten Statornuten für jeweils wenigstens einen der Statorwicklung zugehörigen Leiterstab (17) und mit radial angeordneten Zwischenräumen gebildet ist, die für die Statorwicklung als Kühlkanäle dienen, durch welche ein Kühlgas, vorzugsweise Luft, aus einer Zuströmkammer (28) zum Ringspalt (24) und umgekehrt von dem Ringspalt (24) zu einer Abströmkammer (29) hindurchströmt, welche Zuströmkammer (28) und Abströmkammer (29) strömungsmäßig durch Zwischenwände gegeneinander abgegrenzt sind, dadurch gekennzeichnet, daß der Stator in Sektoren (20) mit jeweils einer Anzahl von Kühlkammern unterteilt ist, daß zwischen den Sektoren (20) im Bereich der Zwischenräume jeweils eine strömungsdichte Schottwand (22) angeordnet ist und daß die den Sektoren (20) zugehörigen Kühlkammern sowohl axial als auch in Umfangsrichtung jeweils alternierend mit einer zugeordneten Zuströmkammer (28) oder Abströmkammer (29) verbunden sind.

2. Elektrische Maschine nach Anspruch 1, dadurch gekennzeichnet, daß die Zuströmkammern (28) konzentrisch um die Abströmkammern (29) angeordnet sind und mittels örtlicher Zuführungen (42) mit den zugeordneten Kühlkammern verbunden sind.

3. Elektrische Maschine nach Anspruch 1 oder 2, dadurch gekennzeichnet, daß die Innenwände der Zuströmkammern (28) gleichzeitig die Außenwände der Abströmkammern (29) bilden und daß die Außenwände der Zuströmkammern (16) von der Wandung des Gehäuses (11) gebildet sind.

## Claims

1. Electrical machine (10) having a housing (11), having a stator (12) and a rotor (14), having a stator winding and having a rotor winding, each formed from conductor bars (17,30) and having an annular gap (24) which is located between the stator (12) and the rotor (14), which stator (12) is formed from laminated cores (13) having stator slots, which are formed on its surface facing the annular gap (24), for in each case at least one conductor bar (17) which is associated with the stator winding and having radially arranged intermediate spaces which are used as cooling channels for the stator winding and through which a cooling gas, preferably air, flows from an inlet chamber (28) to the annular gap (24) and, conversely, from the annular gap (24) to an outlet chamber (29), which inlet chamber (28) and outlet chamber (29) are bounded with respect to one another in flow terms by intermediate walls,
characterized in that the stator is divided into sectors (20) each having a number of cooling chambers, in that a flowtight partition wall (22) is in each case arranged between the sectors (20) in the region of the intermediate spaces, and in that the cooling chambers which are associated with the sectors (20) are in each case alternately connected, both axially and in the circumferential direction, to an associated inlet chamber (28) or outlet chamber (29).

2. Electrical machine according to Claim 1,
characterized in that the inlet chambers (28) are arranged concentrically around the outlet chambers (29) and are connected to the associated cooling chambers by means of local supply lines (42).

3. Electrical machine according to Claim 1 or 2,
characterized in that the inner walls of the inlet chambers (28) at the same time form the outer walls of the outlet chambers (29), and in that the outer walls of the inlet chambers (16) are formed by the wall of the housing (11).

## Revendications

1. Machine électrique (10) avec un carter (11), avec un stator (12) et un rotor (14), avec un enroulement de stator et un enroulement de rotor qui sont formés chacun de barres (17, 30), avec un espace annulaire (24) entre le stator (12) et le rotor (14), lequel stator (12) est formé de paquets de tôles (13) avec des rainures de stator aménagées dans sa surface tournée vers l'espace annulaire (24) pour au moins une barre (17) appartenant à l'enroulement de stator et d'espaces intermédiaires aménagés radialement qui servent de canaux de refroidissement pour l'enroulement de stator et à travers lesquels un gaz de refroidissement, de préférence de l'air, circule d'une chambre d'entrée (28) en direction de l'espace annulaire (24) et inversement de l'espace annulaire (24) en direction d'une chambre de sortie (29), lesquelles chambres d'entrée (28) et de sortie (29) sont séparées l'une de l'autre sur le plan de l'écoulement par des cloisons, caractérisée par le fait que le stator est divisé en secteurs (20) avec chaque fois un certain nombre de chambres de refroidissement, par le fait qu'une paroi de séparation (22) étanche est disposée entre les secteurs (20) dans la région des espaces intermédiaires et par le fait que les chambres de refroidissement associées aux secteurs (20) aussi bien dans la direction axiale que dans la direction périphérique communiquent alternativement avec une chambre d'entrée (28) ou avec une chambre de sortie (29).

2. Machine électrique selon la revendication 1, caractérisée par le fait que les chambres d'entrée (28) sont disposées de manière concentrique autour des chambres de sortie (29) et communiquent avec les chambres de refroidissement concernées par des passages (42) locaux.

3. Machine électrique selon la revendication 1 ou 2, caractérisée par le fait que les parois intérieures des chambres d'entrée (28) constituent simultanément les parois extérieures des chambres de sortie (29) et par le fait que les parois extérieures des chambres d'entrée (16) sont formées par la paroi du carter (11).
